# EUROPÄISCHE PATENTSCHRIFT

(11) **EP 2 593 347 B1**
(45) Veröffentlichungstag und Bekanntmachung des Hinweises auf die Patenterteilung: **05.11.2014**
(21) Anmeldenummer: 11729995.8
(22) Anmeldetag: 07.07.2011
(51) Int. Cl.: B62D 5/04, B62D 6/00

(54) **VERFAHREN UND VORRICHTUNG ZUR KOMPENSATION VON LENKRADDREHSCHWINGUNGEN IN EINEM LENKSYSTEM**
METHOD AND DEVICE FOR PREVENTING TORSIONAL VIBRATIONS ON A STEERING SYSTEM
METHODE ET DISPOSITIF POUR EMPECHER DES VIBRATIONS TORSIONNELLES D'UN SYSTEME DE DIRECTION

(30) Priorität: 12.07.2010 DE 102010031211
(43) Veröffentlichungstag der Anmeldung: 22.05.2013
(73) Patentinhaber: ZF Lenksysteme GmbH, 73527 Schwäbisch Gmünd (DE)
(72) Erfinder: GRÜNER, Stefan, 71549 Auenwald (DE); NIEROBISCH, Thomas, 73575 Leinzell (DE)
(86) Internationale Anmeldenummer: PCT/EP2011/061471
(87) Internationale Veröffentlichungsnummer: WO 2012/007338

(56) Entgegenhaltungen:
- EP-A2- 1 640 246
- EP-A2- 2 006 188
- US-A- 5 894 205
- US-A1- 2002 056 587

## Beschreibung

Die Erfindung betrifft ein Verfahren zur Kompensation von Lenkraddrehschwingungen während des Betriebs eines Lenksystems in einem Fahrzeug, wobei das Lenksystem einen ansteuerbaren Momentensteller umfasst, wie bekannt aus EP 2006 188 A.

Die Erfindung betrifft ferner eine Vorrichtung zur Kompensation von Lenkraddrehschwingungen in einem Lenksystem, wobei das Lenksystem einen ansteuerbaren Momentensteller umfasst.

Bei einem Fahrzeug treten Lenkraddrehschwingungen insbesondere auf, wenn an den Rädern Unwuchten vorhanden sind. Lenkraddrehschwingungen werden auch als "Shimmy" oder "Smooth Road Shake" bezeichnet. Derartige Lenkraddrehschwingungen werden üblicherweise mittels verschiedener Maßnahmen gedämpft oder reduziert, da sie als störend empfunden werden. Beispielsweise ist es bekannt, durch konstruktive Maßnahmen wie etwa den Einsatz von Dämpfungselementen die durch Unwuchten erzeugten Schwingungen teilweise zu kompensieren. Es ist ferner bekannt, zusätzliche elektronische Stellglieder und/oder Sensoren vorzusehen und durch eine entsprechende Ansteuerung der Stellglieder die Lenkraddrehschwingungen zu reduzieren.

Elektrische Lenksysteme (EPS) weisen einen als EPS-Motor bezeichneten Momentensteller auf. Um Lenkraddrehschwingungen zu reduzieren ist es bekannt, eine geeignete Ansteuerung des EPS-Motors vorzusehen. Beispielsweise wird mittels eines Drehmomentsensors das aktuelle Drehstabmoment erfasst. Hochfrequente Anteile des Lenkmoments werden als Störung definiert und über eine von der Fahrzeuggeschwindigkeit und der Lenkgeschwindigkeit sowie dem Drehmoment abhängigen Kennlinie gedämpft. Hier werden jedoch mitunter gewünschte Fahrbahnrückmeldungen fälschlicherweise als Störung erkannt und deshalb eliminiert oder zumindest reduziert. Dies hat negative Auswirkungen auf das Lenkgefühl und kann sicherheitsrelevante Nachteile mit sich bringen, da dem Fahrer möglicherweise wichtige Informationen über die Fahrbahn nicht mehr zur Verfügung stehen. Ein solches System ist beispielsweise aus der EP 1 839 998 A1 bekannt.

Ferner ist aus der EP 1 650 106 B1 ein Verfahren zur Reduzierung von Lenkraddrehschwingungen bekannt, bei dem mittels eines elektrischen Motors an geeigneter Stelle Gegenschwingungen in das Lenksystem eingeleitet werden. Hierdurch werden auftretende Drehschwingungen teilweise kompensiert. Bei dem bekannten Verfahren wird ein aktuelles Lenkrad-Drehmoment benötigt, welches in einem Zeitfenster geeigneter Größe auf das Vorhandensein periodischer Schwingungen untersucht wird. Dieses Verfahren benötigt einen zusätzlichen Drehmomentsensor sowie eine zeitaufwändige Berechnung des Kompensationsmoments mithilfe einer Auto- bzw. Kreuzkorrelationsfunktion.

Aus der US 2009/0000857 A1 ist ein Verfahren zur Unterdrückung einer LenkradDrehschwingung bekannt. In dem bekannten Verfahren wird eine Rotorlagegeschwindigkeit eines die Lenkung unterstützenden Elektromotors ermittelt. Mit dieser Größe wird mittels einer Frequenzschätzungseinheit, einer Phasenkorrektureinheit, sowie einer darauf aufsetzenden Vibrationsunterdrückungseinheit, die die berechnete Frequenz und Phase als Eingangsgröße benötigt, ein Kompensationsstrom berechnet. Aufgrund der Servoanbindung an die Lenkung ist die Rotorlagegeschwindigkeit allerdings nur bedingt als Messgröße geeignet. Insbesondere bei niedrigem Kraftniveau an der Zahnstange kann die Rotorlagegeschwindigkeit nicht ohne weiteres als ausreichend genaue Messgröße herangezogen werden.

Aus der JP 2004-161073 ist ein Verfahren zum Detektieren von Lenkraddrehschwingungen anhand einer FFT (fast fourier transform) eines Drehstabmoments bekannt. Wird bei diesem bekannten Verfahren eine Lenkraddrehschwingung erkannt, so wird die Systemdämpfung insgesamt erhöht. Dies hat jedoch den Nachteil, dass das gesamte Lenkgefühl verschlechtert wird. Eine Verbesserung dieses Verfahrens ist aus der EP 1 975 040 81 bekannt, bei welchem die FFT effizienter dadurch ermittelt wird, dass diese nur in engen Frequenzbändern in Abhängigkeit von einer aktuellen Fahrzeuggeschwindigkeit berechnet wird.

Aus der US 2009/0125186 A1 ist ein weiteres Verfahren zur Kompensation von Lenkraddrehschwingungen bekannt, bei welchem ein gefiltertes Drehstabmoment ermittelt wird und zur Kompensation eine dem gefilterten Drehstabmoment entsprechende jedoch um 180° phasenverschobene Kompensationsgröße aufgeschaltet wird.

Aufgabe der Erfindung ist es, ein Verfahren und eine Vorrichtung zur Verfügung zu stellen, die ohne negative Auswirkungen auf das Lenkgefühl eine möglichst vollständige Kompensation von Lenkraddrehschwingungen ermöglichen.

Die Aufgabe wird durch die kennzeichnenden Merkmale der unabhängigen Patentansprüche gelöst; weitere vorteilhafte Ausgestaltungen sind in den Unteransprüchen genannt.

Erfindungsgemäß wird eine Regelung eines Momentenstellers, also beispielsweise eines EPS-Motors zur Verfügung gestellt, die eine Ansteuerung des Momentenstellers derart ermöglicht, dass auftretende Lenkraddrehschwingungen vollständig, jedenfalls aber nahezu vollständig kompensiert werden können. Hierzu wird gemäß einer Ausführungsform der Erfindung ein Drehstabmoment erfasst. Mittels eines frequenzvariablen Stör- und Zustandsgrößenberechners wird in Abhängigkeit von dem erfassten Drehstabmoment ein Kompensationsmoment ermittelt. Dieses Kompensationsmoment bzw. ein dem Kompensationsmoment entsprechendes Signal wird dann bei einer Ansteuerung des Momentenstellers herangezogen.

Erfindungsgemäß wird ein frequenzvariabler Stör- und Zustandsgrößenberechner herangezogen. Hierbei handelt es sich um einen für variable Frequenzen einsetzbaren sogenannter "Disturbance Observer", der auch als DOFV bezeichnet wird. Disturbance Observer sind beispielsweise in "Katsuhiko Fuwa, Tatsuo Narikiyo and Hisashi Kandoh: A Construction of Disturbance Observer to Cope with Frequency Variation and Its Application to Vibration Suppression Control System; Proceedings of the 17th IFAC World Congress; Seoul, Korea, July 6-11, 2008" beschrieben. Mithilfe der Disturbance Observer können Störungen mit bekannter und konstanter Frequenz reduziert werden. Bei Lenkraddrehschwingungen hängt die Störungsfrequenz von der aktuellen Fahrzeuggeschwindigkeit beziehungsweise den aktuellen Radgeschwindigkeiten ab. Deshalb wird erfindungsgemäß ein DOFV eingesetzt, der auch bei sich verändernden Frequenzen zuverlässig arbeitet. Ein DOFV ist eine regelungstechnische Methode, mit dessen Hilfe aus der Kenntnis von einer sinusförmigen Störung mit variabler Frequenz, einer Stellgröße und möglicherweise weiteren Messgrößen eine zusätzliche Stellgröße berechnet werden kann, die die sinusförmige Störung mit variabler Frequenz unterdrückt beziehungsweise kompensiert. Ein DOFV ist beispielsweise beschrieben in "Tatsuo Narikiyo, Katsuhiko Fuwa and Takeshi Murano: Implementation of Disturbance Attenuation System Based on Frequency Estimation; Proceedings of the 17th IFAC World Congress; Seoul, Korea, July 6-11, 2008".

In dem frequenzvariablen Stör- und Zustandsgrößenberechner ist ein identifiziertes Modell hinterlegt, das das Übertragungsverhalten von dem Moment des Momentenstellers, also beispielsweise dem Motormoment des EPS-Motors, auf das Drehstabmoment beschreibt. Dieses Modell umfasst insbesondere das Übertragungsverhalten bezüglich der Amplitude und Phase des jeweiligen Moments bzw. des jeweiligen Momentensignals. Aus Signalen, die einer Radgeschwindigkeit entsprechen, also beispielsweise aus der Radgeschwindigkeit selbst, einer Fahrzeuggeschwindigkeit oder einer Radwinkelgeschwindigkeit, kann die Frequenz einer aktuellen Störung ermittelt werden. Für die Ermittlung einer aktuellen Störamplitude sowie der Phasenlage der Störung wird ein vorzugsweise gefiltertes Drehstabmoment dem frequenzvariablen Stör- und Zustandsgrößenberechner zur Verfügung gestellt. Eine Filterung des Drehstabmoments erfolgt gemäß einer bevorzugten Ausführungsform mittels eines frequenzvariablen Bandpasses, wobei die Mittenfrequenz des frequenzvariablen Bandpasses entsprechend einer aktuellen Fahrzeuggeschwindigkeit bzw. Radgeschwindigkeit eingestellt wird.

Um eine vollständige oder nahezu vollständige Kompensation der Lenkraddrehschwingung zu erreichen, muss die Kompensation aufrechterhalten werden, auch wenn - aufgrund der Kompensation - in dem aktuell erfassten Drehstabmoment das Störsignal gerade nicht mehr vorhanden ist. Ohne ein Aufrechterhalten der Kompensation würde selbstverständlich zunächst kein Kompensationsmoment ermittelt werden. Infolge davon würde jedoch in einem nächsten Berechnungsschritt wieder eine Lenkraddrehschwingung erfasst werden, was wiederum zur Erzeugung eines Kompensationssignals führen würde. Eine vollständige Kompensation wäre damit nicht möglich. Erfindungsgemäß wird nun das ermittelte Kompensationsmoment rückgeführt und bei einer erneuten Ermittlung eines Kompensationsmoments zusammen mit dem aktuellen Drehstabmoment berücksichtigt. Die Rückführung des Kompensationsmoments (des vorherigen Zeitschritts) erfolgt vorzugsweise vollständig innerhalb des frequenzvariablen Stör- und Zustandsgrößenberechners. Durch diese interne Rückführung werden folglich bei der Berechnung der Störgröße ganzheitlich die bereits kompensierten Anteile berücksichtigt. Dies ermöglicht eine korrekte Berechnung des Störsignals, obwohl die Störung gerade durch das im vorausgegangenen Zeitschritt ermittelte Kompensationsmoment im Messsignal, also im aktuell erfassten Drehstabmoment, nicht mehr sichtbar ist.

Gemäß der vorliegenden Erfindung wird überdies sowohl die Amplitude als auch die Phase des Störsignals bestimmt. Dies erfolgt mittels des das Übertragungsverhalten beschreibenden identifizierten und in dem frequenzvariablen Stör- und Zustandsgrößenberechner abgelegten Modells. Das Modell des Übertragungsverhaltens wird außerdem herangezogen, um das für die Kompensation der Störgröße benötigte Motormoment zu bestimmen. Der frequenzvariable Stör- und Zustandsgrößenberechner umfasst ferner ein Modell sinusförmiger Störungen. Durch die Verbindung des Filterung des Drehstabmoments, beispielsweise mittels des frequenzvariablen Bandpasses und dem frequenzvariablen Stör- und Zustandsgrößenberechner, in welchem das Modell sinusförmiger Störungen abgelegt ist, werden negative Auswirkungen auf das Lenkgefühl wirksam verhindert.

Besonders vorteilhaft ist es, wenn das beispielsweise in einem Steuergerät des Lenksystems ausgebildete und als Modul implementierte Verfahren zur Kompensation der Lenkraddrehschwingungen nicht permanent aktiv ist, da dies unnötig Rechenzeit benötigen würde. Vorteilhafterweise wird deshalb in Abhängigkeit von einer aktuellen Fahrzeuggeschwindigkeit, einem Lenkradwinkel sowie der Amplitude des aktuellen Störsignals auf das Vorhandensein von Lenkraddrehschwingungen geschlossen. Da Lenkraddrehschwingungen nur in einem eng begrenzten Geschwindigkeitsband sowie bei Geradeausfahrt bzw. nahezu Geradeausfahrt auftreten, ist eine Aktivierung des erfindungsgemäßen Verfahrens nur innerhalb dieser Zeitfenster notwendig. Für die Ermittlung der Amplitude des Störsignals wird vorzugsweise ein Modell bzw. ein Beobachter herangezogen. Eine solche Art "geschätzter" Amplitude des Störsignals ist von vorliegend ausreichender Genauigkeit.

Die so ermittelte Amplitude des Störsignals kann ferner für eine Adaption des innerhalb des frequenzvariablen Stör- und Zustandsgrößenberechners abgelegten Modells des Übertragungsverhaltens bzw. auch weiterer in dem frequenzvariablen Stör- und Zustandsgrößenberechner enthaltenen Funktionalitäten herangezogen werden. Für eine Adaption ist beispielsweise in dem Steuergerät des Lenksystems ein skalierter Parametersatz des frequenzvariablen Stör- und Zustandsgrößenberechners hinterlegt, der an die Serienstreuung des jeweiligen Lenksystems angepasst wird. In Abhängigkeit von einer aktuellen Kompensationsgüte bzw. in Abhängigkeit von der Amplitude der trotz Kompensation noch vorhandenen Lenkraddrehschwingungen wird der Skalierungsfaktor gemäß einer besonders bevorzugten Ausführungsform der Erfindung angepasst und damit in der Berechnungseinheit adaptiert.

Bevorzugte Ausführungsformen der Erfindung umfassen also eine explizite Modellierung des Übertragungsverhaltens "Motormoment auf Drehstabmoment" in dem für Lenkraddrehschwingungen relevanten Frequenzbereich sowohl im Amplitudengang als auch im Phasengang, beispielsweise durch eine effiziente Offline-Parametrierung in Form einer Vermessung des Lenksystems auf einem Prüfstand und anschließender Berechnung diesbezüglicher Parameter. Damit wird erreicht, dass über alle relevanten Frequenzen bereits eine ca. 50%-ige Kompensation der Lenkraddrehschwingungen möglich ist, ohne dass eine Applikation im Fahrzeug selbst notwendig ist.

Durch die modellbasierte Rückführung der bereits kompensierten Störinformation kann sogar nahezu eine 100%-ige Kompensation der Lenkraddrehschwingungen erreicht werden, zumindest in einer Kombination mit einer korrekten Phasenlage und Amplitude. Diese sehr hohe Kompensationsgüte wird weiter verbessert bzw. bleibt erhalten durch eine Online-Adaption des erfindungsgemäßen frequenzvariablen Stör- und Zustandsgrößenberechners zum Zwecke einer optimalen Anpassung an Serienstreuungen und insbesondere einer Berücksichtigung der Alterung des Lenksystems. Hierzu wird insbesondere eine Adaption des Übertragungsmodells, das auch für die Rückführung des Kompensationssignals verwendet wird, beispielsweise durch geeignete Skalierung eines skalierten Parametersatzes, durchgeführt.

Ein weiterer Vorteil der Erfindung liegt darin, dass eine üblicherweise bereits vorhandene Sensorik, die beispielsweise einen Sensor für die Erfassung eines aktuellen Drehstabmoments sowie einen Sensor für die Erfassung einer Fahrzeuggeschwindigkeit oder einer Radgeschwindigkeit umfasst, weiter verwendet werden kann. Dadurch, dass ein Großteil der Funktionalität innerhalb eines ganzheitlichen Moduls zur Störgrößenberechnung realisiert ist und der frequenzvariable Stör- und Zustandsgrößenberechner sowohl die modellbasierte Rückführung als auch das Modell des Übertragungsverhaltens umfasst, kann eine sehr recheneffiziente Umsetzung des Stör- und Zustandsgrößenberechners erfolgen. Durch die Ausbildung eines derartigen untrennbaren Moduls zur Berechnung des Kompensationsmoments nach Amplitude und Phase, beispielsweise in Form eines einfachen Zustandsraummodells mit Additionen und Multiplikationen, kann eine sehr effiziente Online-Berechnung erreicht werden. Weiterhin ermöglicht die Erfindung eine explizite Formulierung der Störgröße als Sinussignal, wodurch eine monofrequente, streng selektive Unterdrückung der Störung erreicht wird, ohne dass eine Beeinträchtigung des Lenkgefühls erfolgt. Weitere Merkmale, Anwendungsmöglichkeiten und Vorteile der Erfindung ergeben sich aus der nachfolgenden Beschreibung von Ausführungsbeispielen der Erfindung, die anhand der Zeichnungen erläutert werden.

Es zeigen:
- Figur 1: eine schematische Darstellung eines Lenksystems in einem Fahrzeug,
- Figur 2: eine schematische Darstellung einer ersten Ausführungsform der Erfindung und
- Figur 3: einen beispielhaften Phasengang eines Lenksystems in einem für Lenkraddrehschwingungen relevanten Frequenzbereich.

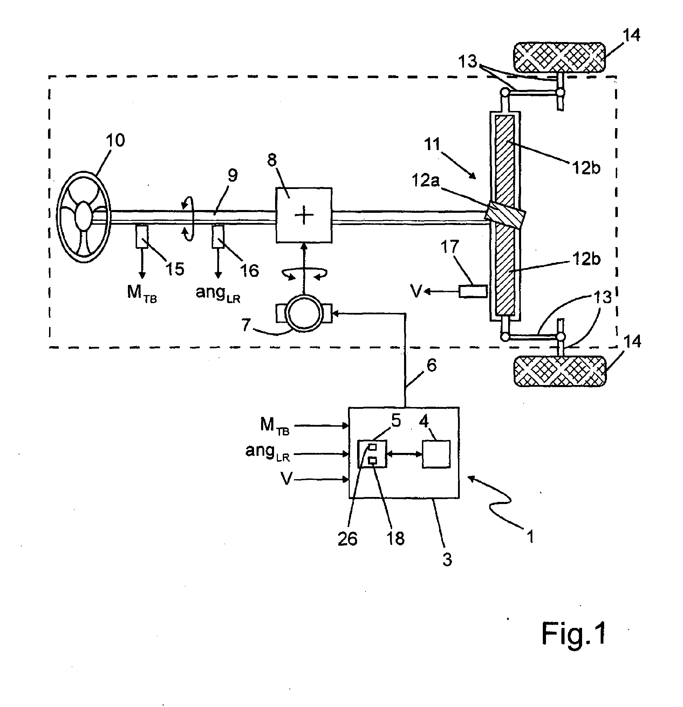

In Figur 1 ist ein elektrisches Lenksystem 1 dargestellt, dass eine Lenkvorrichtung 2 und ein Steuergerät 3 umfasst. In dem Steuergerät 3 ist ein Mikroprozessor 4 angeordnet, der über eine Datenleitung, beispielsweise ein Bussystem, mit einem Speicherelement 5 verbunden ist. In dem Speicherelement 5 sind Speicherbereiche ausgebildet, in denen Funktionsmittel zur Durchführung des erfindungsgemäßen Verfahrens, beispielsweise in Form eines Computerprogramms, abgespeichert sind. In dem Speicherelement 5 können ferner Kernfelder und vorgegebene Parameter oder sonstige Werte abgelegt sein.

Über eine Signalleitung 6 ist das Steuergerät 3 mit einem Momentensteller 7 verbunden, der beispielsweise als Elektromotor ausgebildet ist, so dass eine Steuerung des Elektromotors beziehungsweise des Momentenstellers 7 durch das Steuergerät 3 ermöglicht wird. Der Elektromotor wirkt über ein Getriebe 8 auf einen Drehstab 9. An dem Drehstab 9 ist ein Lenkmittel, beispielsweise ein Lenkrad 10, angeordnet.

Die Lenkvorrichtung weist ferner ein Lenkgetriebe 11 auf, das als Zahnstangenlenkgetriebe ausgebildet ist. Das Lenkgetriebe 11 ist über ein Ritzel 12a und eine Zahnstange 12b auf jeder Fahrzeugseite mit einem Lenkgestänge 13, das jeweils von einem Rad zusammenwirkt, verbunden.

Mittels eines Sensors 15 ist ein Drehstabmoment M_{TB} und mittels eines Sensors 16 ist ein Lenkwinkel ang_{LR} erfassbar. Die Lenkvorrichtung weist ferner einen Sensor 17 auf, mittels dessen eine Fahrzeuggeschwindigkeit v oder eine einer Fahrzeuggeschwindigkeit entsprechende Größe wie beispielsweise eine Raddrehzahl oder eine Radwinkelgeschwindigkeit erfassbar ist.

Die über die Sensoren 15, 16 und 17 erfassten Werte werden über in Figur 1 nicht dargestellte Datenleitungen dem Steuergerät 3 zur Verfügung gestellt. Die Datenleitungen können in vielfältig bekannter Weise ausgeführt sein. Vorzugsweise wird ein Bussystem zur Kommunikation zwischen dem Steuergerät 3 und Sensoren bzw. Aktoren eingesetzt.

Durch geeignete Programmierung des Steuergeräts 3 ist auf dem in Figur 1 dargestellten Lenksystem das erfindungsgemäße Verfahren durchführbar, wobei die Erfindung dann sowohl durch das Steuergerät 3 als auch durch ein entsprechendes Computerprogramm 18 realisiert ist. Das Steuergerät stellt dann die erfindungsgemäße Vorrichtung dar und das Computerprogramm stellt ebenso die Erfindung dar wie das erfindungsgemäße Verfahren, zu dessen Ausführung das Computerprogramm programmiert ist.

Das in Figur 1 dargestellte Lenksystem 1 ist zur Durchführung des erfindungsgemäßen Verfahrens hergerichtet. Hierzu ist beispielsweise das Steuergerät 3 in entsprechender Weise programmiert. Mittels des erfindungsgemäßen Verfahrens wird gemäß einer möglichen Ausführungsform eine vollständige Kompensation von Lenkraddrehschwingungen in einem Kraftfahrzeug ermöglicht, wobei mittels des Momentenstellers 7, also beispielsweise des Servomotors der EPS, geeignete Gegenschwingungen in die Lenkvorrichtung 2 eingeprägt werden, welche wiederum anhand eines aus dem Drehstab 9 extrahierten Störsignals berechnet werden. Hierzu ist vorzugsweise keine Zusatzsensorik notwendig, so dass für die Implementierung des erfindungsgemäßen Verfahrens keine Modifikation der vorhandenen Sensorik notwendig ist, was wiederum die Kosten senkt.

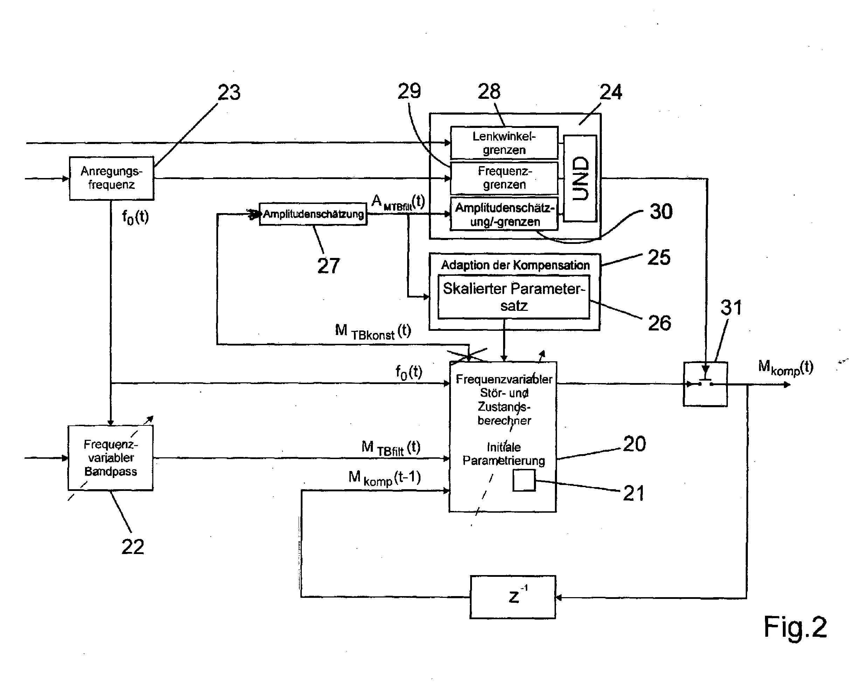

In Figur 2 ist eine mögliche Ausführungsform der Erfindung anhand eines Blockdiagramms dargestellt. Zur Ansteuerung des Momentenstellers 7 ist in Figur 2 ein frequenzvariabler Stör- und Zustandsgrößenberechner 20 mit explizit definierter sinusförmiger Störgröße und interner Rückkopplung zur Berücksichtigung bereits kompensierter Anteile des Störsignals dargestellt, der beispielsweise als Computerprogramm 18 in dem Steuergerät 3 abgespeichert ist. Mittels des frequenzvariablen Stör- und Zustandsgrößenberechners 20 wird unter Berücksichtigung des Phasen- und Amplitudengangs ein Kompensationsmoment ermittelt unter Verwendung eines skalierten Modells 21 des Übertragungsverhaltens zwischen Momentensteller 7 und Drehstab 9. Das skalierte Modell 21 wird gemäß einer bevorzugten Ausführungsform online, also während des Betriebs des Lenksystems 1, an eine Serienstreuung und Alterung des Lenksystems 1 angepasst, wodurch eine optimale Kompensation der Lenkraddrehschwingungen garantiert ist.

Von zentraler Bedeutung für die vorliegende Erfindung ist die Verwendung des frequenzvariablen Stör- und Zustandsberechners 20, in welchem das parametrierte Modell 21 des Übergangsverhaltens von Motormoment auf Drehstabmoment hinterlegt ist. In Abhängigkeit von einem zu einem bestimmten Zeitpunkt t ermittelten aktuellen Drehstabmoment M_{TB} (t) wird mittels des frequenzvariablen Stör- und Zustandsberechners 20 ein Kompensationsmoment M_{KOMP} (t) ermittelt, anhand dessen ein Signal für die Ansteuerung des Momentenstellers 7 erzeugt wird, was zu einer Kompensation vorhandener Lenkraddrehschwingungen führt. Das beispielsweise mittels des Sensors 15 ermittelte Drehstabmoment M_{TB} (t) wird vorzugsweise mittels eines frequenzvariablen Bandpasses 22 gefiltert, um beispielsweise einen für das vorliegende System störenden Einfluss hochfrequenter Störungen auszuschließen. Das solcherart gefilterte Drehstabmoment M_{Tbfilt} (t) wird schließlich dem frequenzvariablen Stör- und Zustandsberechner 20 für die Weiterverarbeitung zur Verfügung gestellt.

Die Einstellung der Frequenz des frequenzvariablen Bandpasses 22 erfolgt mittels eines Anregungsfrequenzermittlers 23, der aus einer erfassten Geschwindigkeit v(t), beispielsweise einer Raddrehzahl bzw. einer Radgeschwindigkeit oder einer Fahrzeuggeschwindigkeit, eine Anregungsfrequenz f₀(t) bestimmt. Die ermittelte Anregungsfrequenz f₀(t) wird außerdem zur Einstellung der Frequenz des frequenzvariablen Stör- und Zustandsgrößenberechners 20 diesem zur Verfügung gestellt. Um ein Aufrechterhalten des Kompensationsmoments M_{KOM}p(t) auch dann sicherzustellen, wenn eine Lenkraddrehschwingung aufgrund der erfindungsgemäß erfolgten Kompensation in dem Drehstabmoment M_{TB}(t) nicht mehr feststellbar ist, wird das jeweils berechnete Kompensationsmoment M_{KOMP}(t-1) für die Berechnung des Kompensationsmoments M_{KOMP}(t) berücksichtigt durch eine vorzugsweise in dem frequenzvariablen Stör- und Zustandsgrößenberechner 20 integrierte Rückführung des Kompensationsmoments M_{KOMP}(t-1). Diese Rückführung erfolgt unter Berücksichtigung des Modells 21, also des Übertragungsverhaltens bezüglich des Phasen- und Amplitudengangs zwischen dem Momentensteller 7 und dem Drehstab 9.

Gemäß der in Figur 2 dargestellten besonders vorteilhaften Ausführungsform der Erfindung erfolgt eine Adaption der Kompensation. Hierzu wird in einem Adaptionsblock 25 ein skalierter Parametersatz 26 verändert, um eine Alterung des Lenksystems 1 bzw. eine Serienstreuung zu kompensieren und stets eine optimale Leistung des erfindungsgemäßen Verfahrens zu garantieren. Der Parametersatz ist beispielsweise in dem Steuergerät 3 abgespeichert. Vorliegend sind insbesondere die Auswirkungen eines Alterns der Lenkung auf das Übertragungsverhalten Motormoment - Drehstabmoment von Bedeutung. Deshalb wird mittels des skalierten Parametersatzes 26 insbesondere das Modell 21 adaptiert. Das Erkennen einer Alterung des Lenksystems 1 erfolgt in dem Adaptionsblock 25 in Abhängigkeit von einer aktuellen Amplitude A_{MTB}(t), die vorzugsweise mittels einer Amplitudenschätzungseinheit 27 aus einem konstruierten Moment M_{TBkonst}(t) gebildet wird. M_{TBkonst}(t) stellt die Störgröße dar, die sich aus der Addition von M_{TBfilt} (t) und der sich durch Rückführung von M_{KOMP}(t-1) berechneten, bereits kompensierten Störanteile im Drehstabmoment ergibt. Ist die Kompensation nicht aktiv, entspricht das konstruierte Moment M_{TBkonst}(t) dem gefilterten Drehstabmoment M_{TBfilt}(t). Bei aktiver Kompensation hingegen muss das Störsignal rekonstruiert werden. In diesem Fall wird das konstruierte Moment M_{TBkonst}(t) daher von der Rückführung dominiert, während das gefilterte Drehstabmoment M_{TBfilt}(t) nur einen geringen Beitrag liefert. Die so ermittelte Amplitude A_{MTB} (t) der Restschwingung ist ein Maß für die Kompensationsgüte und gibt damit Auskunft, ob eine Anpassung an die Serienstreuung der Lenkung bzw. aufgrund eines Alterns des Lenksystems durchgeführt werden soll.

Bei dem in Figur 2 dargestellten Ausführungsbeispiel ist zusätzlich eine Lenkraddrehschwingungs-Erkennungseinheit 24 vorgesehen. Diese ermöglicht es, die Erzeugung eines Kompensationsmoments M_{KOMP}(t) zu aktivieren bzw. zu deaktivieren in Abhängigkeit davon, ob aktuell eine Lenkraddrehschwingung vorliegt. Lenkraddrehschwingungen liegen üblicherweise nur in einem eng begrenzten Geschwindigkeitsband sowie bei Geradeausfahrt vor, weshalb eine Aktivierung der Funktion zur Bestimmung des Kompensationsmoments nur in diesen Zeitfenstern notwendig ist. Die Lenkraddrehschwingungs-Erkennungseinheit 24 umfasst in der in Figur 2 beispielhaft dargestellten Ausführungsform ein Modul 28, in welchem ein beispielsweise mittels des Sensors 16 aktuell erfasster Lenkradwinkel ang_{LR}(t) daraufhin geprüft wird, ob der aktuelle Lenkwinkel innerhalb vorgegebener Grenzen ist. Damit kann festgestellt werden, ob das Fahrzeug aktuell in Geradeausfahrt bzw. nahezu in Geradeausfahrt bewegt wird. In einem Modul 29 wird die aktuelle Anregungsfrequenz f₀(t) daraufhin überprüft, ob sich diese innerhalb vorgegebener Frequenzgrenzen befindet, woraus wiederum geschlossen werden kann, ob sich das Fahrzeug innerhalb eines bestimmten Geschwindigkeitsbereiches bewegt.

In einem Modul 30 wird geprüft, ob die aktuelle Amplitude A_{MTB}(t) sich innerhalb vorgegebener Grenzen befindet. Die mittels der Module 28, 29 und 30 durchgeführten Auswertungen werden einem Modul 31 zugeführt, das schließlich eine Aktivierung oder Deaktivierung des frequenzvariablen Stör- und Zustandsgrößenberechners 20 veranlasst. Hierzu kann vorgesehen sein, dass in dem Modul 31 die mittels der Module 28, 29 und 30 bestimmten Auswerteergebnisse mittels einer logischen UND-Operation kombiniert werden. Die Lenkraddrehschwingung-Erkennungseinheit 24 ermöglicht damit das Aktivieren der Bestimmung des Kompensationsmoments M_{KOMP}(t) für den Fall, dass sich ein aktueller Lenkwinkel innerhalb vorgebbarer Lenkwinkelgrenzen bewegt, eine aktuelle Anregungsfrequenz innerhalb vorgegebener Frequenzgrenzen ist und eine aktuelle Amplitude des erfassten Drehstabmoments sich innerhalb vorgegebener Amplitudengrenzen befindet. Wenn diese drei Bedingungen vorliegen, wird auf das Vorliegen einer Lenkraddrehschwingung geschlossen und die Erzeugung des Kompensationsmoments aktiviert.

Ein besonderer Vorteil der vorliegenden Erfindung liegt darin, dass bei der Bestimmung des Kompensationsmoments M_{KOMP}(t) dieses Moment sowohl hinsichtlich seiner Amplitude als auch des Phasengangs genau bestimmt wird. Lediglich das Aufschalten eines Kompensationsmoments mit einer Phase von 180° kann nämlich nicht zu einer vollständigen Kompensation von Lenkraddrehschwingungen führen, da festgestellt wurde, dass der Phasengang nicht konstant bei 180° ist.

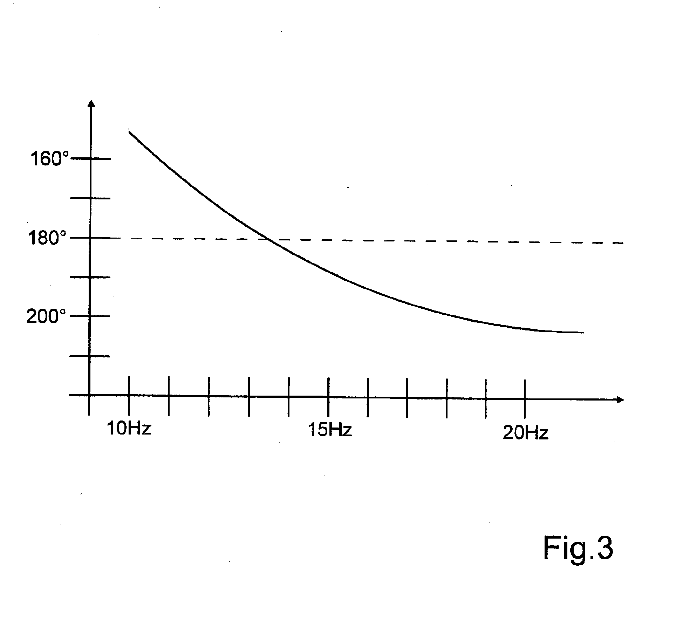

In Figur 3 ist beispielhaft für ein mögliches Lenksystem 1 ein Zusammenhang zwischen der Anregungsfrequenz einerseits und der jeweiligen Phasenlage andererseits dargestellt. Hierbei ist in Figur 3 der Phasengang eines Lenksystems im für Lenkraddrehschwingungen relevanten Frequenzbereich von ca. 10 bis ca. 20Hz schematisch gezeigt. Bei diesem Beispiel ist erkennbar, dass der Phasengang bei einer Frequenz von ca. 10Hz bei 160° liegt und der Phasengang bei 20Hz ca. 195° beträgt. Die erfindungsgemäß explizite Berücksichtigung des Phasengangs bei der Bestimmung des Kompensationssignals sowie die modellbasierte Rückführung ermöglichen eine signifikante Verbesserung der Kompensationsgüte gegenüber den bekannten Verfahren und Vorrichtungen.

## Patentansprüche

1. Verfahren zur Kompensation von Lenkraddrehschwingungen während des Betriebs eines einen ansteuerbaren Momentensteller (7) umfassenden Lenksystems (1) in einem Fahrzeug, wobei ein aktuelles Drehstabmoment (M_{TB}) ermittelt wird, in Abhängigkeit von dem aktuellen Drehstabmoment (M_{TB}) ein Kompensationsmoment (M_{Komp}) ermittelt wird und in Abhängigkeit von dem Kompensationsmoment (M_{Komp}) eine Ansteuerung des Momentenstellers (7) erfolgt, **dadurch gekennzeichnet, dass** das Drehstabmoment (M_{TB}) oder eine in Abhängigkeit von dem Drehstabmoment (M_{TB}) gebildete Größe einem frequenzvariablen Stör- und Zustandsgrößenberechner (24), der ein Modell einer sinusförmigen Störung und ein Modell des Übertragungsverhaltens von einem Moment des Momentenstellers (7) beinhaltet, zugeführt wird und das Kompensationsmoment (M_{Komp}) unter Verwendung des Modells der Störung mittels des frequenzvariablen Stör- und Zustandsgrößenberechners (24) ermittelt wird.

2. Verfahren nach Anspruch 1, **dadurch gekennzeichnet, dass** mittels des frequenzvariablen Stör- und Zustandsgrößenberechners (24) eine Amplitude und eine Phase der Lenkraddrehschwingung bei der Ermittlung des Kompensationsmoments (M_{Komp}) berücksichtigt werden.

3. Verfahren nach Anspruch 1 oder 2, **dadurch gekennzeichnet, dass** ein bereits kompensierter Anteil der Lenkraddrehschwingungen bei der Ermittlung des Kompensationsmoments (M_{Komp}) berücksichtigt wird.

4. Verfahren nach Anspruch 3, **dadurch gekennzeichnet, dass** das Kompensationsmoment (M_{Komp}) zu dem frequenzvariablen Stör- und Zustandsgrößenberechner (24) rückgeführt wird.

5. Verfahren nach einem der vorangehenden Ansprüche, **dadurch gekennzeichnet, dass** das Modell das Übertragungsverhalten zumindest im für die Lenkraddrehschwingungen relevanten Frequenzbereich bezüglich des Amplitudengangs als auch bezüglich des Phasengangs beschreibt.

6. Verfahren nach einem der vorangehenden Ansprüche, **dadurch gekennzeichnet, dass** das Kompensationsmoment (M_{Komp}) nur ermittelt wird, wenn mittels eines Prüfverfahrens auf das Vorliegen einer Lenkraddrehschwingung geschlossen wird.

7. Verfahren nach Anspruch 6, **dadurch gekennzeichnet, dass** auf das Vorliegen einer Lenkraddrehschwingung geschlossen wird, falls eine Fahrzeuggeschwindigkeit (v(t)), eine Raddrehzahl oder eine mit einer Raddrehzahl korrelierenden Größe innerhalb eines vorgebbaren Bereichs ist und das Lenksystem zumindest im wesentlichen in einer Geradeausstellung betrieben wird.

8. Verfahren nach Anspruch 6 oder 7, **dadurch gekennzeichnet, dass** das Prüfverfahren die Auswertung einer aktuellen Amplitude des Drehstabmoments umfasst, wobei die Amplitude vorzugsweise mittels eines Schätzverfahrens ermittelt wird.

9. Verfahren nach einem der vorangehenden Ansprüche, **dadurch gekennzeichnet, dass** das erfasste Drehstabmoment gefiltert wird und das gefilterte Drehstabmoment dem frequenzvariablen Stör- und Zustandsgrößenberechner (24) für die Ermittlung des Kompensationsmoments (M_{Komp}) zugeführt wird.

10. Verfahren nach Anspruch 9, **dadurch gekennzeichnet, dass** als Filter ein variabler Bandpass (23) verwendet wird, in Abhängigkeit von einer Fahrzeuggeschwindigkeit (v(t)), einer Raddrehzahl oder einer mit einer Raddrehzahl korrelierenden Größe eine Anregungsfrequenz (f₀) gebildet wird und eine Mittenfrequenz des variablen Bandpasses (23) in Abhängigkeit von der Anregungsfrequenz (f₀) gewählt wird.

11. Verfahren nach einem der vorangegangenen Ansprüche, **dadurch gekennzeichnet, dass** der frequenzvariable Stör- und Zustandsgrößenberechner (24) bezüglich mindestens einer Größe parametriert ist und eine Adaption mindestens einer Funktion des frequenzvariablen Stör- und Zustandsgrößenberechners (24) zur Kompensation von einer Serienstreuung und/oder zur Kompensation von einer Alterung des Lenksystems durch Veränderung des mindestens einen Parameters erfolgt.

12. Verfahren nach Anspruch 11, **dadurch gekennzeichnet, dass** der mindestens eine Parameter in Abhängigkeit von einer ermittelten Kompensationsgüte verändert wird.

13. Verfahren nach Anspruch 12, **dadurch gekennzeichnet, dass** die Kompensationsgüte durch Auswerten einer Amplitude einer noch verbleibenden Restschwingung in dem Drehstabmoment bestimmbar ist.

14. Verfahren nach einem der vorangehenden Ansprüche, **dadurch gekennzeichnet, dass** die Adaption des frequenzvariablen Stör- und Zustandsgrößenberechners (24) zumindest eine Adaption des Modells des Übertragungsverhaltens umfasst.

15. Verfahren nach einem der vorangehenden Ansprüche, **dadurch gekennzeichnet, dass** der frequenzvariable Stör- und Zustandsgrößenberechner (24) als ein untrennbares Modul ausgebildet ist, das in Abhängigkeit von dem Drehstabmoment (M_{TB}) das Kompensationsmoment (M_{Komp}) ermittelt, wobei der frequenzvariable Stör- und Zustandsgrößenberechner (24) insbesondere das Modell des Übertragungsverhaltens umfasst.

16. Vorrichtung zur Kompensation von Lenkraddrehschwingungen während des Betriebs eines Lenksystems (1) in einem Fahrzeug, wobei das Lenksystem (1) einen ansteuerbaren Momentensteller (7) und Mittel (15) zum Bestimmen eines aktuelles Drehstabmoments (M_{TB}) aufweist und wobei die Vorrichtung Mittel zum Bestimmen eines Kompensationsmoments (M_{Komp}) in Abhängigkeit von dem aktuellen Drehstabmoment (M_{TB}) und Mittel zum Ansteuern des Momentenstellers (7) in Abhängigkeit von dem Kompensationsmoment (M_{Komp}), **dadurch gekennzeichnet, dass** die Vorrichtung einen frequenzvariablen Stör- und Zustandsgrößenberechner (24) umfasst, wobei der frequenzvariable Stör- und Zustandsgrößenberechner (24), der ein Modell einer sinusförmigen Störung und ein Modell des Übertragungsverhaltens von einem Moment des Momentenstellers (7) beinhaltet, zur Bestimmung des Kompensationsmoments (M_{Komp}) in Abhängigkeit von dem Drehstabmoment (M_{TB}) oder einer in Abhängigkeit von dem Drehstabmoment (M_{TB}) gebildeten Größe unter Verwendung des Modells der Störung ausgebildet ist.

17. Vorrichtung nach Anspruch 16, **dadurch gekennzeichnet, dass** die Vorrichtung Mittel zur Durchführung eines Verfahrens nach einem der Ansprüche 1 bis 15 aufweist.

## Claims

1. Method for compensating torsional vibrations of a steering wheel during the operation of a steering system (1), comprising an actuable torque adjuster (7), in a vehicle, wherein a current torsion bar torque (M_{TB}) is determined, a compensation torque (M_{comp}) is determined as a function of the current torsion bar torque (M_{TB}), and the torque adjuster (7) is actuated as a function of the compensation torque (M_{comp}), **characterized in that** the torsion bar torque (M_{TB}) or a variable which is formed as a function of the torsion bar torque (M_{TB}) is fed to a frequency-variable fault and state variable calculator (24) which includes a model of sinusoidal disruption and a model of the transmission behaviour of a torque of the torque adjuster (7), and the compensation torque (M_{comp}) is determined using the model of the disruption by means of the frequency-variable fault and state variable calculator (24).

2. Method according to Claim 1, **characterized in that** an amplitude and a phase of the torsional vibration of the steering wheel are taken into account during the determination of the compensation torque (M_{comp}) by means of the frequency-variable fault and state variable calculator (24).

3. Method according to Claim 1 or 2, **characterized in that** an already compensated portion of the torsional vibrations of the steering wheel is taken into account in the determination of the compensation torque (M_{comp}).

4. Method according to Claim 3, **characterized in that** the compensation torque (M_{comp}) is fed back to the frequency-variable fault and state variable calculator (24).

5. Method according to one of the preceding claims, **characterized in that** the model describes the transmission behaviour at least in the frequency range relevant for the torsional vibrations of the steering wheel with respect to the amplitude response and also with respect to the phase response.

6. Method according to one of the preceding claims, **characterized in that** the compensation torque (M_{comp}) is determined only if the presence of a torsional vibration of the steering wheel is inferred by means of a checking method.

7. Method according to Claim 6, **characterized in that** the presence of torsional vibration of the steering wheel is inferred if a vehicle speed (v(t)), a wheel speed or a variable which correlates with a wheel speed is within a predefinable range and the steering system is operated at least essentially in a straight-ahead position.

8. Method according to Claim 6 or 7, **characterized in that** the checking method comprises the evaluation of a current amplitude of the torsion bar torque, wherein the amplitude is preferably determined by means of an estimation method.

9. Method according to one of the preceding claims, **characterized in that** the detected torsion bar torque is filtered, and the filtered torsion bar torque is fed to the frequency-variable fault and state variable calculator (24) for the determination of the compensation torque (M_{comp}).

10. Method according to Claim 9, **characterized in that** a variable bandpass (23) is used as the filter, an excitation frequency (f₀) is formed as a function of a vehicle speed (v(t)), a wheel speed or a variable which correlates with a wheel speed, and a centre frequency of the variable bandpass (23) is selected as a function of the excitation frequency (f₀).

11. Method according to one of the preceding claims, **characterized in that** the frequency-variable fault and state variable calculator (24) is parametrized with respect to at least one variable, and at least one function of the frequency-variable fault and state variable calculator (24) is adapted in order to compensate series variation and/or in order to compensate ageing of the steering system by changing the at least one parameter.

12. Method according to Claim 11, **characterized in that** the at least one parameter is changed as a function of a determined compensation quality.

13. Method according to Claim 12, **characterized in that** the compensation quality can be determined by evaluating an amplitude of a remaining residual vibration in the torsion bar torque.

14. Method according to one of the preceding claims, **characterized in that** the adaptation of the frequency-variable fault and state variable calculator (24) comprises at least adaptation of the model of the transmission behaviour.

15. Method according to one of the preceding claims, **characterized in that** the frequency-variable fault and state variable calculator (24) is embodied as an inseparable module which determines the compensation torque (M_{comp}) as a function of the torsion bar torque (M_{TB}), wherein the frequency-variable fault and state variable calculator (24) comprises, in particular, the model of the transmission behaviour.

16. Device for compensating torsional vibrations of a steering wheel during the operation of a steering system (1) in a vehicle, wherein the steering system (1) has an actuable torque adjuster (7) and means (15) for determining a current torsion bar torque (M_{TB}), and wherein the device has means for determining a compensation torque (M_{comp}) as a function of the current torsion bar torque (M_{TB}) and means for actuating the torque adjuster (7) as a function of the compensation torque (M_{comp}), **characterized in that** the device comprises a frequency-variable fault and state variable calculator (24), wherein the frequency-variable fault and state variable calculator (24), which includes a model of sinusoidal disruption and a model of the transmission behaviour of a torque of the torque adjuster (7), is designed to determine the compensation torque (M_{comp}) as a function of the torsion bar torque (M_{TB}) or a variable, formed as a function of the torsion bar torque (M_{TB}), using the model of the disruption.

17. Device according to Claim 16, **characterized in that** the device has means for carrying out a method according to one of Claims 1 to 15.

## Revendications

1. Procédé de compensation des vibrations torsionnelles du volant de direction pendant le fonctionnement d'un système de direction (1) comprenant un actionneur à couple (7) commandable dans un véhicule, un couple de barre de torsion (M_{TB}) actuel étant déterminé, un couple de compensation (M_{Komp}) étant déterminé en fonction du couple de barre de torsion (M_{TB}) actuel et une commande de l'actionneur à couple (7) étant effectuée en fonction du couple de compensation (M_{Komp}), **caractérisé en ce que** le couple de barre de torsion (M_{TB}) ou une grandeur formée en fonction du couple de barre de torsion (M_{TB}) est acheminé(e) à un calculateur de grandeur de perturbation et d'état à fréquence variable (24), lequel contient un modèle d'une perturbation sinusoïdale et un modèle du comportement de transmission d'un couple de l'actionneur à couple (7), et le couple de compensation (M_{Komp}) est déterminé en utilisant le modèle de la perturbation à l'aide du calculateur de grandeur de perturbation et d'état à fréquence variable (24).

2. Procédé selon la revendication 1, **caractérisé en ce qu'**une amplitude et une phase des vibrations torsionnelles du volant de direction sont prises en compte au moyen du calculateur de grandeur de perturbation et d'état à fréquence variable (24) lors de la détermination du couple de compensation (M_{Komp}).

3. Procédé selon la revendication 1 ou 2, **caractérisé en ce qu'**une part déjà compensée des vibrations torsionnelles du volant de direction est prise en compte lors de la détermination du couple de compensation (M_{Komp}).

4. Procédé selon la revendication 3, **caractérisé en ce que** le couple de compensation (M_{Komp}) est renvoyé au calculateur de grandeur de perturbation et d'état à fréquence variable (24).

5. Procédé selon l'une des revendications précédentes, **caractérisé en ce que** le modèle décrit le comportement de transmission au moins dans la plage de fréquences pertinente pour les vibrations torsionnelles du volant de direction pour ce qui concerne la réponse en amplitude et aussi pour ce qui concerne la réponse en phase.

6. Procédé selon l'une des revendications précédentes, **caractérisé en ce que** le couple de compensation (M_{Komp}) n'est déterminé que si la présence d'une vibration torsionnelle du volant de direction est déduite à l'aide d'un procédé de contrôle.

7. Procédé selon la revendication 6, **caractérisé en ce que** la présence d'une vibration torsionnelle du volant de direction est déduite si une vitesse du véhicule (v(t)), une vitesse de rotation de roue ou une grandeur en corrélation avec une vitesse de rotation de roue se trouve à l'intérieur d'une plage pouvant être prédéfinie et le système de direction est utilisé au moins pour l'essentiel dans une position de ligne droite.

8. Procédé selon la revendication 6 ou 7, **caractérisé en ce que** le procédé de contrôle comprend l'interprétation d'une amplitude actuelle du couple de barre de torsion, l'amplitude étant de préférence déterminée à l'aide d'un procédé d'estimation.

9. Procédé selon l'une des revendications précédentes, **caractérisé en ce que** le couple de barre de torsion détecté est filtré et le couple de barre de torsion filtré est acheminé au calculateur de grandeur de perturbation et d'état à fréquence variable (24) pour la détermination du couple de compensation (M_{Komp}).

10. Procédé selon la revendication 9, **caractérisé en ce que** le filtre utilisé est une filtre passe-bande variable (23), une fréquence d'excitation (f₀) est formée en fonction d'une vitesse du véhicule (v(t)), d'une vitesse de rotation de roue ou d'une grandeur en corrélation avec une vitesse de rotation de roue et une fréquence centrale du filtre passe-bande variable (23) est sélectionnée en fonction de la fréquence d'excitation (f₀).

11. Procédé selon l'une des revendications précédentes, **caractérisé en ce que** le calculateur de grandeur de perturbation et d'état à fréquence variable (24) est paramétré en rapport avec au moins une grandeur et une adaptation d'au moins une fonction du calculateur de grandeur de perturbation et d'état à fréquence variable (24) est effectuée en vue de compenser une dispersion de série et/ou en vue de compenser un vieillissement du système de direction par une modification de l'au moins un paramètre.

12. Procédé selon la revendication 11, **caractérisé en ce que** l'au moins un paramètre est modifié en fonction d'une qualité de compensation déterminée.

13. Procédé selon la revendication 12, **caractérisé en ce que** la qualité de compensation peut être déterminée par l'interprétation d'une amplitude d'une vibration résiduelle qui subsiste encore dans le couple de barre de torsion.

14. Procédé selon l'une des revendications précédentes, **caractérisé en ce que** l'adaptation du calculateur de grandeur de perturbation et d'état à fréquence variable (24) comprend au moins une adaptation du modèle du comportement de transmission.

15. Procédé selon l'une des revendications précédentes, **caractérisé en ce que** le calculateur de grandeur de perturbation et d'état à fréquence variable (24) est réalisé sous la forme d'un module indivisible qui détermine le couple de compensation (M_{Komp}) en fonction du couple de barre de torsion (M_{TB}), le calculateur de grandeur de perturbation et d'état à fréquence variable (24) comprenant notamment le modèle du comportement de transmission.

16. Dispositif de compensation des vibrations torsionnelles du volant de direction pendant le fonctionnement d'un système de direction (1) dans un véhicule, le système de direction (1) présentant un actionneur à couple (7) commandable et des moyens (15) destinés à déterminer un couple de barre de torsion (M_{TB}) actuel, et le dispositif présentant des moyens pour déterminer un couple de compensation (M_{Komp}) en fonction du couple de barre de torsion (M_{TB}) actuel et des moyens pour commander l'actionneur à couple (7) en fonction du couple de compensation (M_{Komp}), **caractérisé en ce que** le dispositif comprend un calculateur de grandeur de perturbation et d'état à fréquence variable (24), le calculateur de grandeur de perturbation et d'état à fréquence variable (24), qui contient un modèle d'une perturbation sinusoïdale et un modèle du comportement de transmission d'un couple de l'actionneur à couple (7), étant configuré pour déterminer le couple de compensation (M_{Komp}) en fonction du couple de barre de torsion (M_{TB}) ou en fonction d'une grandeur formée en fonction du couple de barre de torsion (M_{TB}) en utilisant le modèle de la perturbation.

17. Dispositif selon la revendication 16, **caractérisé en ce que** le dispositif présente des moyens pour mettre en oeuvre un procédé selon l'une des revendications 1 à 15.
